(19) **Europäisches Patentamt / European Patent Office / Office européen des brevets**

(11) **EP 1 935 257 A1**

(12) **EUROPEAN PATENT APPLICATION**

(43) Date of publication:
**25.06.2008 Bulletin 2008/26**

(21) Application number: **07115648.3**

(22) Date of filing: **04.09.2007**

(51) Int Cl.:
*A23L 1/09* (2006.01)     *A23L 1/236* (2006.01)
*A23L 1/24* (2006.01)     *A23L 1/29* (2006.01)
*A23L 1/39* (2006.01)

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK RS**

(30) Priority: **18.12.2006 US 612291**

(71) Applicant: **KRAFT FOODS HOLDINGS, INC.
Northfield,
Illinois 60093 (US)**

(72) Inventors:
• **Brown, Peter Harris
  Glenview, NY 60025 (US)**
• **Isman, Joan Levine
  Brewster, NY 10509 (US)**
• **Katcher, Jay Harvey
  Chestnut Ridge, NY 10977 (US)**

(74) Representative: **Smaggasgale, Gillian Helen
W.P. Thompson & Co.
55 Drury Lane
London WC2B 5SQ (GB)**

(54) **Acidic sweetener and methods of use thereof**

(57)    An acidic sweetener is provided that is a single additive effective to provide both sweetness and acidity to a food item or other comestible. Preferably, the acidic sweetener has a low glycemic index value to generally improve the nutritional profile of the comestible to which it is added. A method to produce a food item using the acidic sweetener is also provided. The method converts a syrup sweetener to the acidic sweetener additive. In a preferred form, the method uses an enzyme mixture of glucose oxidase and catalase to convert a portion of the glucose in the syrup sweetener into gluconic acid.

**Description**

FIELD OF THE INVENTION

The present invention provides a food additive having a low glycemic index value that also provides multiple functionalities to comestibles and other foodstuff. The invention also relates to a process of making the food additive by converting glucose (preferably from a syrup sweetener) to gluconic acid using glucose oxidase and catalase enzymes. The invention also relates to a method of using the food additive in foods and beverages, and preferably, low acidic foods and beverages.

BACKGROUND OF THE INVENTION

Food additives provide various functionalities to foods or other comestibles, such as adding flavor, increasing stability, preserving freshness, as well as many other characteristics. In general, food additives may be categorized into several groups. Typical groupings include colorants, emulsifiers, flavorants, gelling agents, thickeners and stabilizers, preservatives, sweeteners, anti-caking agents, antioxidants, and acidulants to name but a few. Within each category, there are many different kinds of compositions or compounds that can be used to achieve the desired characteristics of the food or other comestible. In many cases, however, multiple food additives may be required to impart several different characteristics to the food or comestible. Utilizing multiple additives adds costs, complexity, and may result in unwanted interactions between the additives or impart undesired heath consequences to the food's consumption.

Sweeteners are one of the most widely used additives. While providing a sweet taste, sweeteners may also provide texture, lower the freezing point, act as a preservative, strengthen the mouthfeel, or simply add bulk. High fructose corn syrup (HFCS) is one common sweetener that is often used in foods and beverages. In particular, HFCS is a preferred sweetener in canned fruits, condiments, soft drinks, ice cream, frozen desserts, and other food items. While desired in many foods, HFCS is also considered a high glycemic index (GI) food item. The glycemic index is a relative scale that measures the ability of an ingested food ingredient to raise blood glucose levels relative to a standard amount of glucose. Therefore, as a food additive having a relatively high GI value, HFCS may increase blood glucose or sugar levels more than a relatively lower GI value food item. HFCS generally has a GI value using glucose (dextrose) as the reference between about 66 (for 42% HFCS, which is about 42% fructose on a dry basis) to about 55 (for 55% HFCS, which is about 55 percent fructose on a dry basis).

It is widely recognized that reducing the GI of foods and other comestibles is beneficial and provides positive medical and health benefits. For instance, both the medical and nutritional communities commonly recommend lowering the GI of foods for people who have type II diabetes and those with pre-diabetic symptoms, such as insulin resistance, excessive weight, or syndrome X. Accordingly, while useful as a sweetener, HFCS may not be preferred by some consumers because of its high GI value.

Acidulants are another common additive often included in prepared foods or comestibles. In many cases, acidulants are added to foods to lower pH, which increases the food's tartness or acidity. In other cases, acidulants may be added to foods to act as preservatives or for the setting of gels. Common acidulants include citric acid, malic acid, succinic acid, lactic acid, phosphoric acid, and many others. While commonly used, these acidulants often do not provide their desired functionality in a cost effective manner.

Gluconic acid is commonly derived from glucose and has applications in general industry, the food industry, and in pharmaceutical preparations. Gluconic acid may be produced through a fermentation process or an enzymatic process, such as the enzymatic conversion of glucose using the enzymes glucose oxidase and catalase. For example, U.S. Patent Nos. 3,619,396; 3,935,071; 4,460,686; and 5,897,995 describe the enzymatic conversion of glucose in aqueous solutions to gluconic acid. In such methods, the enzyme glucose oxidase catalyzes the oxidation of glucose into glucono lactone and hydrogen peroxide. Generally, the glucono lactone then spontaneously converts in an aqueous solution to gluconic acid; however, such conversion may also be catalyzed by lactonase. The enzyme catalase converts the hydrogen peroxide that is formed in the initial reaction to water and oxygen. The overall reduction in hydrogen peroxide concentration reduces oxidative inactivation of the glucose oxidase and the formed oxygen may also be used in the initial reaction to oxidize any remaining glucose.

These prior art patent references optimize process conditions to produce and separate gluconic acid with the highest conversion rates achievable because the goal of such current methods is the formation of as much gluconic acid as possible. Accordingly, these references generally disclose conditions to achieve greater than 50 percent, and closer to 100 percent conversion, of the glucose to gluconic acid. Lower conversion rates of these current methods are undesired because such methods would not efficiently produce sufficient amounts of gluconic acid for their intended purposes. In addition, these references disclose methods to remove or recover the enzymes from the resultant solutions using either separate recovery steps (i.e., U.S. Patent No. 3,619,396 uses electrodialysis) or employing the enzymes in an insoluble form (i.e., U.S. Patent Nos. 3,935,071 and 4,460,686). Separation of the enzymes generally results in higher costs, which can decreases productivity.

As noted above, many prepared foods or comestibles require a combination of multiple additives to achieve the desired characteristics, such as both acidulants and sweeteners. Unfortunately, the more additives required to achieve the desired properties, the greater the costs, complexity, and supply chain needed to manufacture the food or other comestible. Furthermore, multiple additives may result in interactions between the additives that adversely affect texture, mouthfeel, flavor, or other organoleptic properties of the comestible.

In light of the above, it is desired to obtain a single additive that provides multiple functionalities, such as sweetness and acidity, to provide improved productivity to the manufacture of a food item or other comestible. It is also desired to obtain a relatively lower GI value food additive to improve the nutritional profile of the food item or comestible using the food additive.

SUMMARY

In one embodiment, there is provided an additive that is a single ingredient able to impart multiple functionalities to a food or other comestible. Preferably, the additive is an acidic sweetener that provides both sweetness and acidity to comestibles. Most preferably, the acidic sweetener includes an acidic portion provided by gluconic acid and a sweet portion provided by glucose and, in particular, by glucose and fructose. The acidic sweetener also has a glycemic index value (GI) less than the GI of a corn syrup, and most preferably, less than the GI of high fructose corn syrup. Such acidic sweeteners are desirable because they improve the productivity of food processing by providing multiple functionalities (i.e., sweetness and acidity) in a single ingredient and also improve the health profile of the comestible as a result of the lowered GI.

In a preferred form, the acidic sweetener is a liquid additive that includes about 9 to about 18 percent glucose, about 0.4 to 10 percent gluconic acid, and about 15 to about 19 percent fructose. On a solids or dry basis, this acidic sweetener includes about 20 to about 52 percent glucose, about 1.2 to about 28 percent gluconic acid, and about 42 to about 55 percent fructose. In another preferred form, the liquid acidic sweetener is a high-fructose acidic sweetener that includes about 7 to about 9 percent glucose, about 7 to about 10 percent gluconic acid, and about 15 to about 19 percent fructose. On a solids or dry basis, this high-fructose acidic sweetener composition is equivalent to about 20 to about 26 percent glucose, about 20 to about 28 percent gluconic acid, and about 42 to about 55 percent fructose.

As mentioned above, the acidic sweeteners herein preferably have a reduced glycemic index (GI) value as compared to other traditional sweeteners, such as HFCS. More specifically, the acidic sweeteners preferably have a GI value less than about 55, and more preferably less than about 40. Varying processing conditions and reaction time during the manufacture of the additive may affect the GI value, as well as other properties of the additive, such as sweetness, acidity, or other functionalities.

For purposes herein, the GI values are calculated using glucose (dextrose) as the reference food and the data provided in Table 1 of Foster-Powell, K. et al., "2002. International Table of Glycemic Index and Glycemic Load Values: 2002," Am. J. Clin. Nutr. 76:5-56 (2002). For purposes herein, the Table 1 below provides the estimated mean GI values for the individual components used to calculate the GI values of the various acidic sweetener additives described below.

Table 1: Glycemic Index (GI) Values

| Ingredient | GI Value |
|---|---|
| Glucose | 100 |
| Gluconic Acid | 19 |
| Fructose | 19 |
| Sucrose | 68 |
| Maltose | 73 |
| Triose | 54 |

The GI value of the various acidic sweeteners herein are calculated for a 50 gram reference sample on a dry basis using the following formula:

$$\text{GI Value} = G_\% GI_G + GA_\% GI_{GA} + F_\% GI_F + S_\% GI_S + M_\% GI_M + T_\% GI_T$$

Where:

$G_\%$ = percent dry solids of glucose in the acidic sweetener;

$GI_G$ = mean GI of glucose;

$GA_\%$ = percent dry solids of gluconic acid in the acidic sweetener; and

$GI_{GA}$ = GI of gluconic acid;

$F_\%$ = percent dry solids of fructose in the acidic sweetener;

$GI_F$ = mean GI of fructose;

$S_\%$ = percent dry solids of sucrose in the acidic sweetener;

$GI_S$ = mean GI of sucrose;

$M_\%$ = percent dry solids of maltose in the acidic sweetener;

$GI_M$ = mean GI of maltose;

$T_\%$ = percent dry solids of triose in the acidic sweetener; and

$GI_T$ = mean GI of triose.

The percentage of dry solids of each ingredient are divided by 100, and the mean GI of each ingredient is from Table 1 above.

In another embodiment, the invention relates to a method of producing an acidic sweetener and employing the formed acidic sweetener additive within a comestible, and preferably a low acidic comestible (i.e., less than about pH 4.5), to provide both sweetness and acidity with a single ingredient. As a result, the acidic sweetener can replace all or a portion of separate sweet and acidic ingredients of the comestible. Use of the acidic sweetener, therefore, simplifies ingredient formulations and product costs and generally improves the health profile of the foods into which they are added. For example, even if only a portion of the sweet and acidic ingredients of a comestible is replaced with the acidic sweeteners described herein, a productivity and cost savings are achieved because the gluconic acid is formed in a more cost effective manner than other traditional acidulants (such as citric acid for example), and the acidic sweetener also includes the benefit of providing the sweet components at the same time, which other traditional acidulants cannot provide.

One method of forming the acidic sweetener includes first providing an aqueous composition of glucose, preferably in the form of an aqueous solution of a syrup sweetener having at least a glucose portion. Preferred syrups include corn syrup, high fructose corn syrup, honey, molasses, and the like. For example, either 42% HFCS or 55% HFCS may be used and diluted with an equal weight of water to produce an aqueous solution that has a sufficient viscosity and water activity for the subsequent enzymatic conversions and the desired enzymes. Next, an enzyme mixture, preferably comprising the enzymes glucose oxidase and catalase, is added to the aqueous composition to form a reaction mixture. The reaction mixture is then allowed to react for a predetermined amount of time at a predetermined pH to oxidize some, but not more than about 50 percent, of the glucose portion (i.e., preferably about 3 to about 50 percent and, most preferably about 3 to about 30 percent) to gluconic acid in order to form the acidic sweetener having the lowered GI and multiple functionalities. The amount of time the reaction proceeds depends on the amount of acidic and sweet profiles desired in the acidic sweetener and the particular rate of conversion of the glucose to gluconic acid. To stop the reaction, the pH is preferably allowed to drop between about 2.5 and about 4.0 because in this range the enzymes will lose their activity and the acidic sweetener will be resistant to growth of microbes.

Preferably, the enzyme mixture is not separated from the acidic sweetener, but remains in solution in an inactivated state due to the drop in pH. As a result, it is most preferred to use the acidic sweetener in low acidic comestibles (i.e., foods with pH below about 4.5, such as beverages, sauces, and the like) so that the enzyme remains in the inactivated condition. If the acidic sweetener is employed in comestibles with higher pH (i.e., above about 4.5, and in particular, neutral pH), it is possible that over extended shelf lives, the enzymes could alter the acidic and sweet profiles of the comestible by reacting additional portions of the glucose. In such cases, the enzymes could be removed or deactivated.

Optionally, the method may include other steps or involve controlling various reaction parameters. For instance, air may be added into the reaction mixture to further aid the oxidation. The pH of the reaction mixture may be controlled. For example, with the enzyme mixture of glucose oxidase and catalase, it is preferred to maintain the pH at about 4.5 to about 6.2, and preferably about 5.2, via appropriate additions of NaOH or other basic materials in order to obtain acceptable conversion rates. Also, the temperature may be controlled. With the enzyme mixture of glucose oxidase and catalase, it is preferred that the temperature of the reaction mixture be maintained between about 35°C and about 45°C and, most preferably, about 40°C.

While conversion rates may vary, it is expected that between about 3 to about 30 percent of the glucose in the syrup sweetener will be converted to gluconic acid. In any event, the conversion should be maintained below about 50 percent. Although conversion of over about 50 percent of the glucose in the syrup sweetener to gluconic acid is possible, such high conversion may be cost prohibitive for producing a sweet acidulant useful in food applications and this should be avoided. Additionally, conversion greater than about 50 percent is expected to lead to materials having unbalanced sweetness and acidity which are unsuitable for food products.

Once formed, the acidic sweetener additive may be added to a comestible or other food item in an amount effective to provide both acidity and sweetness to a comestible or other food item. At the same time, the amounts of traditional acidulants and sweeteners in the comestible or other food item may be lowered. As mentioned above, the acidic sweetener is preferably incorporated in low acidic foods with a pH below about 4.5, such as beverages, sauces, and the like. In this manner, the single acidic sweetener can replace a portion or the entire amount of separate acidulants and/or sweeteners in the comestible to provide productivity and cost improvement with the potential to also lower the food's GI value. In one example, a low acidic comestible includes about 2 to about 15 percent of the acidic sweetener. Such amount is effective to replace such about 5 to about 88 percent of the comestible's sweet component and about 50 to about 100 percent of the comestible's acidic component and still provide a similar mouthfeel and flavor profile.

Even if the acidic sweeteners replace only a portion of traditional acidulants and sweeteners in foods and comestible, advantages are still obtained over the traditional foods and comestibles. For example, the acidic portion of the acidic sweetener is generally lower in cost then the typical acidulant added to products. Therefore, replacement of a portion of the acidulant in food items with the acidic sweetener results in a cost savings to a food manufacturer with minimal, and preferably, no sacrifice to taste and functionality. The acidic sweetener also has a lower percent of glucose than typical HFCS, thereby reducing the glycemic index of the food or comestible in which the acidic sweetener has been added resulting in a health benefit to the consumer. In addition, due to the lower percent of glucose, the acidic sweetener preferably has a higher fructose to glucose ratio than typical HFCS; therefore, the acidic sweetener provides "more sweetness" per gram of sweetener then typical sweeteners such as HFCS (i.e., fructose is "sweeter" than glucose).

DETAILED DESCRIPTION OF PREFERRED EMBODIMENTS

In one aspect, the invention relates to a single additive, such as a single food additive, that provides multiple functionalities to a food or other comestible. For example, the additive may be classified as an acidic sweetener, which is a single food ingredient that provides both sweetness and acidity to a food. In another aspect, the additive preferably has a glycemic index (GI) value lower than other traditional sweeteners, such as HFCS and the like. Therefore, not only does the additive provide multiple functionalities, but also may impart improved health benefits to the food or other comestible.

In general, the acidic sweetener provides the multiple functionalities through different portions of the additive composition. For instance, the additive provides a sweet functionality from at least glucose, and preferably a glucose and fructose portion where the additive preferably includes more fructose than glucose. The acidic sweetener also provides an acidic functionality from at least a gluconic acid portion at the same time. With such multiple properties, the acidic sweetener may be used in any food item or other comestible that traditionally requires separate acidic and sweet food additives. Therefore, the acidic sweetener can provide both functionalities to food or comestibles while providing cost advantages and improved productivity due to simplified ingredient mixtures.

In yet another aspect, the invention also relates to a method of producing an additive having multiple functionalities, such as the above described acidic sweetener, and using such additive to replace sweet and acidic portions of a comestible or other foodstuff, and preferably a low acidic comestible or other foodstuff (i.e., about pH of 4.5 or below). In general, the method employs an enzymatic conversion of a syrup sweetener that has at least a glucose portion to form the acidic sweetener and then blending such additive into a comestible.

The method to form an acidic sweetener additive will now be discussed in more detail. The preferred method involves converting a portion of glucose from a syrup sweetener to gluconic acid to form an additive with at least a glucose portion and a gluconic acid portion. More preferably, the method involves converting a portion of glucose from a syrup sweetener containing both glucose and fructose to form an additive with at least a glucose portion, a fructose portion, and a gluconic acid portion. To facilitate such conversions, it is preferred to use an enzyme mixture of glucose oxidase and catalase to oxidize a portion of the glucose in the syrups to the gluconic acid. While the method may be used on any sweet syrup or other sweetener (e.g., corn syrup, HFCS, honey, molasses, or the like) it is preferred to use high fructose corn syrup (HFCS).

HFCS typically includes, on a solids basis, about 42 to about 55 percent fructose, from about 42 to about 53 percent glucose, and smaller amounts of higher saccharides. The preferred methods herein convert about 3 to about 50 percent of the glucose in HFCS to the gluconic acid. As noted earlier, higher conversions may be achievable, but are undesired because they are generally cost prohibitive and produce an additive having unbalanced acidity and sweetness levels for food applications. Therefore, the acidic sweeteners herein preferably include predetermined amounts of a fructose portion, a gluconic acid portion, and a glucose portion together with small amounts of the other saccharides to achieve an appropriate balance between acidity and sweetness.

More specifically, a multi-step process is preferably employed to produce the acidic sweeteners disclosed herein. First, an aqueous solution of the syrup sweetener is prepared by adding water to dilute the solution. Generally, the syrup is diluted in half by adding an equal weight of water, but any dilution ratio that is sufficient to facilitate the subsequent enzymatic reaction will suffice. Second, an enzyme solution, preferably comprising the enzymes glucose oxidase and catalase, is added to the aqueous solution to form a reaction mixture. Generally, the oxidase is added at a level about 0.01 to about 2 percent and the catalase at a level of about 0.01 to about 2 percent. However, the optimal ratio of enzymes may vary based on reaction temperature, process scale and reactor geometry, rate of oxygen addition, and/or specific activities of the enzymes. Third, the reaction mixture is allowed to react for a predetermined amount of time to oxidize some of the glucose in the syrup to gluconic acid to form the acidic sweetener. Lastly, the reaction is stopped after the predetermined amount of gluconic acid is produced. It will be appreciated by those skilled in the art that the amount of time the reaction proceeds depends on the amount of acidic sweetener desired and the rate of conversion of the glucose to gluconic acid.

While the reaction is proceeding, a base (e.g., NaOH) is preferably added to maintain the pH at optimal conditions for the enzymes. Once the desired balance of acidic and sweet portions are formed, the enzymatic reaction may be stopped by heating the reaction to about 65°C to about 80°C, or preferably, by discontinuing addition of the base. By stopping addition of base and not maintaining a constant pH, the pH of the reaction mixture is lowered as the reaction continues due to the formation of gluconic acid. If the pH is left unchecked, the reaction mixture will eventually lower itself to a pH of between about 2.5 and about 4.0. Between these pH values, the enzymes are inactivated and microbial growth is prevented. The resultant mixture is the acidic sweetener. If desired, the acidic sweetener may then be diluted with water to reduce acidity and/or make it easier for incorporation into food or other comestibles. Preferably, the enzymes remain in the acidic sweetener and separation or extraction steps are not required or used.

While not wishing to be limited by theory, it is believed that the conversion of glucose to gluconic acid involves a multi-part reaction. For example, it is believed that the enzyme glucose oxidase first oxidizes the glucose in the HFCS to delta gluconolactone and hydrogen peroxide. The delta gluconolactone is then spontaneously converted to gluconic acid in the presence of water. At the same time, the enzyme catalase also converts the formed hydrogen peroxide to water and oxygen. The resulting composition of the enzymatic conversion of HFCS is the acidic sweetener, which is preferably a single food additive that includes a glucose portion, a fructose portion, and a gluconic acid portion.

The level of conversion of glucose to gluconic acid generally affects the sweet and acidic properties of the resultant acidic sweetener. For instance, a high conversion (i.e., up to about 50 percent) of glucose to gluconic acid produces an additive with more acidic functionality. Likewise, as more glucose is converted to gluconic acid, the additive also achieves a lower GI. Therefore, in some instances it is preferred to convert up to about 50 percent of the glucose portion of the HFCS to gluconic acid. On the other hand, to achieve an additive with more of a sweet functionality, a low conversion rate (i.e., closer to about 3 percent) would be desired so that the additive includes higher amounts of glucose rather than gluconic acid. However, reaction kinetics, costs, and required acid levels in finished products will determine the actual extent of the reaction.

To achieve optimal conversion rates for the additive (i.e., up to about 50 percent conversion of the glucose portion) the pH, oxygen saturation, temperature, and enzyme levels of the reaction mixture are preferably monitored and controlled. For example, with the enzymes glucose oxidase and catalase, the pH of the reaction mixture is preferably controlled between about 5.2 and about 5.3. This preferred pH range may be achieved by first equilibrating the mixture to a pH of about 5.3, which is slightly above the desired pH level, through appropriate additions of an acidulant (i.e., HCl) or a base (i.e., NaOH). Thereafter, the pH is allowed to drop to about 5.2, and then maintained at about 5.2 throughout the predetermined reaction time through appropriate additions of a basic solution (i.e., NaOH). Due to the formation of gluconic acid during the reaction, the pH of the mixture would continue to decrease if a constant pH was not maintained through continuous additions of a base solution. It has been found that the enzyme system works optimally while maintaining a pH of about 5.2. That is, at a constant pH of about 5.2, depending on how long the reaction is allowed to proceed, conversion rates up to 50 percent of the glucose portion can be achieved when other conditions are also optimized.

For purposes herein, the enzymatic reaction is stopped when about 50 percent or less (preferably about 3 to about 30 percent) of the glucose has been converted to gluconic acid in order to form the acidic sweetener with optimal amounts of both acidic and sweet portions in order to provide both functionalities. It will be appreciated that the particular conversion may vary depending on the desired properties of the resultant acidic sweetener. Conversions above about 50 percent may be achievable, but are generally not desired because the acidic sweetener would generally exhibit excess acidity and insufficient sweetness and also be cost prohibitive for food applications.

It is also preferred to use an enzyme mixture of catalase and glucose oxidase. The amount of catalase in the enzyme mixture is preferably between about 0.01 and about 2.0 percent, and most preferably, about 0.1 to about 0.3 percent. The amount of glucose oxidase in the enzyme mixture is preferably between about 0.01 and about 2.0 percent, and most preferably, about 0.1 to about 0.3 percent. Preferably, a 2:1 ratio of catalase: glucose oxidase (percent:percent) is employed to provide a productive conversion at 40°C.

Temperature control is also another factor that should be optimized for good conversion rates. Preferably, with the enzymes glucose oxidase and catalase, the temperature of the reaction mixture should be maintained between about 25°C to about 45°C and, preferably, about 40°C. At about 40°C, good conversion rates of glucose to gluconic acid (grams/hour) were achieved with this enzyme mixture.

The resulting product of the above described method is the acidic sweetener. This additive is a single ingredient that imparts both a sweet functionality and an acidic functionality to a food or other comestible to which it is added while preferably lowering its GI value due to the reduced levels of glucose. When converted from HFCS, the acidic sweetener preferably includes at least a glucose portion, a fructose portion, and a gluconic acid portion with a GI value less than that of HFCS. The acidic sweetener additive can be a direct replacement, in whole or in part, for citric acid or other acidulants and a direct replacement, in whole or in part, for sweeteners at the same time.

More specifically, the composition of the acid sweetener preferably includes relatively high levels of fructose and generally lower levels of gluconic acid and glucose. That is, when formed from a HFCS, the acidic sweetener preferably includes, on a solids basis, about 20 to about 52 percent glucose, about 1.2 to about 28 percent gluconic acid, and about 42 to about 55 percent fructose. Most preferably, the acidic sweetener derived from HFCS includes about, on a solids basis, 20 to about 26 percent glucose, about 20 to about 28 percent gluconic acid, and about 42 to about 55 percent fructose. In this most preferred form, the acidic sweetener additive is generally considered a high-fructose acidic sweetener additive.

As suggested above, the additives disclosed herein provide sufficient acidity and sweetness to impart both functionalities to a food or other comestible at the same time and generally improve the nutritional profile of foods by lowering the GI value. For example, the GI of the acidic sweetener additive is less than about 55, and preferably, less than about 40. However, as noted above, varying conversion rates of glucose to gluconic acid generally affect such acidity and GI values. In addition, while not wishing to be limited by theory, it is also believed a synergistic effect between the acidic portion and the sweet portion results in a further reduction of GI value of the foods or other comestible in which the acidic sweetener may be added.

The disclosed acidic sweeteners may be used in any comestibles, such as foods, medicines, or other compositions, that traditionally use both acidic and sweet food additives. For example, the acidic sweetener may be used to replace, in whole or in part, the citric acid and sweetener in ready-to-drink beverages. In other uses, the acidic sweetener may be used to replace, in whole or in part, the acidulant and/or sweetener in powdered beverages, salad dressings, spreads, sauces, or confections. There are other uses of the acidic sweetener as well. Preferably, the acidic sweetener is added to low acidic foods, such as those foods with a pH below about 4.5. In this manner, the enzymes that remain in the acidic sweetener from the enzymatic conversion reaction are held in an inactivated condition. As stated above, it is preferred that the enzymes are not separated from the acidic sweetener. While the above food items are disclosed as an example of some uses of the acidic sweetener, other uses are, of course, possible.

In one example, about 2 to about 15 percent of the acidic sweetener may be added to the comestible to provide both acidity and sweetness. Depending on the particular food item, the acidic sweetener is effective to replace about 50 to about 100 percent of the comestible's acidic component (e.g., citric acid and the like) and about 5 and about 88 percent of its sugar component (e.g., HFCS and the like) and still provide flavor profiles and mouthfeel similar to that of a comestible without the acidic sweetener additive. For example, in a ready-to-drink beverage, about 2 percent of the acidic sweetener can replace about 50 percent of the acidulant and about 5 percent of the sweetener at the same time. In another example, in a BBQ sauce about 15 percent of the acidic sweetener can replace 100 percent of the acidulant and about 88 percent of the sweetener. Of course, one skilled in the art will appreciate that the amount of acidic sweetener added to a particular comestible will vary depending on the desired acidity and sweetness levels.

Advantages and embodiments of this invention are further illustrated by the following examples, but the particular materials and amounts thereof recited in these examples, as well as other conditions and details, should not be construed to unduly limit the invention. All parts and percentages are by weight unless otherwise directed. All references cited in the present specification are hereby incorporated herein by reference.

## EXAMPLES

**EXAMPLE 1:** Conversion of High Fructose Corn Syrup to a Sweet Acidulant.

A study was completed analyzing various conditions for the conversion of HFCS to an acidic sweetener. In this example, temperature and enzyme concentration were evaluated on the rate of conversion of HFCS to the acidic sweetener.

A 42% high fructose corn syrup with a composition of about 40.6% glucose, 29.4% fructose, and 30% water (about 70% solids with about 42% fructose and about 58 % glucose with a smaller amount of larger saccharides on a solids basis) was diluted with an equal weight of water to form an aqueous HFCS solution with a composition of about 20.3% glucose, 14.7% fructose, and 65% water.

For each trial of the experiment, approximately 50 ml of the aqueous solution was added to a water jacketed reaction vessel and equilibrated at a desired temperature as indicated in Table 2 below. In addition, the indicated levels of glucose oxidase (OxyGO 1500, Genencor) and catalase (Fermcolase 1000, Genencor) were then added to the vessel after the temperature was stable. The pH was then adjusted to about 5.3 by adding 0.1 N HCl; at which point, air was vigorously bubbled through the reaction vessel at a rate of 5 mm using an Aalborg Instruments FM013-88 flowmeter. The pH of the reaction was monitored and maintained at 5.2 by the addition of 1N NaOH using an automatic Brinkmann 702 SM Titrino titrator.

Each reaction was allowed to proceed for about 1 hour. The reaction was stopped by discontinuing addition of the sodium hydroxide and allowing the pH of the reaction to drop to between pH 2.5-4.0. The sweet acidulant is the final solution after the reaction.

The amount of NaOH added to maintain the pH at 5.2 was an indicator (on a molar basis) of the conversion of glucose and an indicator of the amount of gluconic acid produced. That is, the gluconic acid production rate was calculated from the average rate of NaOH (1N) addition as the molar amount of NaOH added per hour is equivalent to molar amount of glucose converted into gluconic acid. And, the conversion of gluconic acid was calculated by comparing the molar amount of glucose converted to the amount originally in the starting solution (i.e., about 20.3%).

A steady-state average rate (ml/hr) of NaOH addition was determined by averaging the running total of base added to the solution as measured at 15 minute intervals. This steady-state average rate of NaOH addition was used to average out any initial or end effects of the reaction. The average rate of NaOH addition for each sample in Table 2 below was determined by measuring the total amount of NaOH (1N) added at 15 minute intervals throughout the reaction using the formula:

$$\frac{(\text{ml NaOH})_{15\,min} \times 4 + (\text{ml NaOH})_{30\,min} \times 2 + (\text{ml NaOH})_{45\,min} \times 1.33 + (\text{ml NaOH})_{60\,min}}{4}$$

Table 2 below summarizes the results and calculations of the various reactions.

Table 2: Effects of temperature and enzyme concentration on conversion of the glucose portion of HFCS to gluconic acid

| No. | Catalase (%) | Glucose Oxidase (%) | Temp (°C) | Steady-State Average Rate of (1N) NaOH Addition (ml/hr)* | Gluconic Acid Production Rate (gram/hr) ** | Total Glucose converted (%) ** |
|---|---|---|---|---|---|---|
| A | 0.1 | 0.05 | 25 | 1.14 | 0.223 | 1.01 |
| B | 0.1 | 0.05 | 35 | 1.05 | 0.206 | 0.93 |
| C | 0.1 | 0.05 | 40 | 0.99 | 0.194 | 0.88 |
| D | 0.1 | 0.1 | 35 | 1.28 | 0.251 | 1.13 |
| E | 0.1 | 0.1 | 40 | 1.46 | 0.286 | 1.30 |
| F | 0.1 | 0.1 | 45 | 1.24 | 0.243 | 1.10 |
| G | 0.2 | 0.1 | 35 | 1.55 | 0.303 | 1.37 |
| H | 0.2 | 0.1 | 40 | 1.87 | 0.367 | 1.66 |
| 1 | 0.4 | 0.1 | 35 | 1.73 | 0.339 | 1.53 |

*additions at 15, 30, 45, and 60 minutes were measured, and the average rate was calculated using the formula described above.
**calculated as described above.

Based on the conversion rate of glucose and the composition of the starting solution, the composition of the acidic sweetener can be calculated. These results are provided in Table 3 below.

Table 3: Calculated Composition Of Resultant Acidic Sweeteners

| Ex. No. | Glucose, % | Gluconic Acid, % | Fructose,% | Water,% |
|---|---|---|---|---|
| A | 20.10 | 0.21 | 14.7 | 65 |
| B | 20.12 | 0.18 | 14.7 | 65 |
| C | 20.13 | 0.17 | 14.7 | 65 |
| D | 20.08 | 0.22 | 14.7 | 65 |
| E | 20.04 | 0.26 | 14.7 | 65 |
| F | 20.08 | 0.22 | 14.7 | 65 |
| G | 20.03 | 0.27 | 14.7 | 65 |
| H | 19.97 | 0.33 | 14.7 | 65 |
| I | 19.99 | 0.31 | 14.7 | 65 |

The formation of gluconic acid and the reduction of glucose was verified analytically by using HPLC with an Aminex Ion Exclusion Column (BioRad) and a mobile phase of 2.8 mN nitric acid at a flow rate of 0.6 mn/min. A Waters 40 multi wavelength UV-Vis detector was used to confirm the level of gluconic acid and a Waters 410 differential refractometer was used to confirm the level of glucose.

**EXAMPLE 2:** Conversion of High Fructose Corn Syrup to a Sweet Acidulant.

Another study was completed similar to Example 1 to analyze gluconic acid production from HFCS over extended reaction times. An aqueous solution of 42% HFCS (Chicago Sweeteners, Illinois) was prepared by diluting about 120 grams of HFCS with 120 grams water to make an aqueous solution of HFCS with about 20 percent glucose, about 15 percent fructose, and about 65 percent water (about 42 percent fructose and about 58 percent glucose on a dry basis).
Approximately 50 ml of the aqueous HFCS solution was added to a water-jacketed reaction vessel and equilibrated at 35°C with continuous stirring. About 650 µl of catalase (Fermcolase 1000, Genecor) and about 50 µl (OxyGO1500, Genecor) were added to the solution. The pH was adjusted to about 5.3 using 0.1 N HCl, and air was vigorously bubbled through the reaction vessel at a rate of 5 mm using an Aalborg Instruments FM013-88 flowmeter. The pH was maintained at 5.2 as in Example 1 through additions of 1N NaOH. The results were determined as in Example 1 and provided in Table 4 below.
Table 4: Conversion of HFCS to Acidic Sweetener

| Minutes | Running Total 1 N NaOH added (ml) (Measured) | Running Total Gluconic Acid produced, grams (Calculated) | Total Glucose converted, % (Calculated) | GI* (Calculated) |
|---|---|---|---|---|
| 0 | 0 | 0.00 | 0 | 66 |
| 60 | 2.21 | 0.43 | 3.9 | 64 |
| 90 | 3.45 | 0.67 | 6.2 | 63 |
| 120 | 4.35 | 0.85 | 7.8 | 62 |
| *50 gram sample using dextrose as reference. | | | | |

As in Example 1, the amount of gluconic acid produced was determined based on the molar amount of NaOH added to maintain the reaction pH because the amount of added NaOH is equivalent on a molar basis to the amount of gluconic acid produced. Likewise, the amount of glucose converted was determined by comparing the calculated amount of gluconic acid produced to the starting amount of glucose (i.e., about 13.5 percent). The GI was calculated using the formula described above in the specification.
The reaction was allowed to run over night without further additions of NaOH to maintain the pH. The next morning, the reaction had stopped at a pH of 3.3. About 10.5 ml of additional (1N) NaOH was required to bring the reaction back to pH about 5.2. As a result, letting the reaction run overnight produced a calculated total of 2.9 grams of gluconic acid or about 26 percent conversion of glucose. This results in a calculated GI value for the acidic sweetener of about 54 at this point of the reaction. The pH of the reaction mixture continued to drop indicating that the enzyme mixture was still active and additional amounts of gluconic acid would be produced if the reaction was extended.

**EXAMPLE 3:** Conversion of a Glucose Solution into a Sweet Acidulant.

A similar experiment was conducted in Example 1, but using dextrose as the starting material rather than HFCS. Dextrose (glucose) was prepared by diluting 5 grams of anhydrous dextrose powder with water up to a volume of 50 ml to form a 10 percent glucose solution.

Approximately 50 ml of the glucose solution was added to a water-jacketed reaction vessel and equilibrated at 35° C with continuous stirring. Glucose oxidase (OxyGO1500, Genecor) and catalase (Fermcolase 1000, Genencor) were added at 0.1 percent and 1.3 percent (v/v), respectively. The pH was adjusted to 5.3 with (0.1 N) HCl, and air was vigorously bubbled through the reaction vessel at a rate of 5 mm using an Aalborg Instruments FM013-88 flowometer. The pH was maintained at 5.2 as in Example 1. The results were determined as in Example 1 and provided below in Table 5.
Table 5: Conversion of dextrose to a acidic sweetener

| Minutes | Running Total of 1 N NaOH addeda(ml) (Measured) | Running Total of Gluconic Acid (g) (Calculated) | Total Glucose converted (%) (Calculated) | GI* (Calculated) |
|---|---|---|---|---|
| 0 | 0 | 0.000 | 0 | 100 |
| 35 | 1.49 | 0.29 | 5.34 | 98 |
| 60 | 2.56 | 0.50 | 9.2 | 96 |
| 75 | 3.25 | 0.64 | 11.7 | 95 |
| 90 | 3.86 | 0.76 | 13.9 | 94 |
| 120 | 5.19 | 1.02 | 18.9 | 92 |
| *50 gram sample using dextrose as reference | | | | |

As with Example 1, the formation of gluconic acid was verified by HPLC using an Aminex Ion Exclusion Column (BioRad) and a mobile phase of 2.8 nM nitric acid at a flow rate of 0.6 ml/min and detected using a Waters 490 Multi-wavelength UV-Vis detector at 214 nm. In this experiment, a steady state reaction rate for conversion of glucose to gluconic acid under the above conditions was approximately 0.5 grams gluconic acid formed per hour. Such results are approximately equivalent to converting about 9 percent of the glucose in the solution to gluconic acid each hour.

**EXAMPLE 4:** Conversion of Corn Syrup into a Sweet Acidulant.

An experiment was conducted using corn syrup (Sweetose 4300, Staley) having about 37 percent glucose, about 29 percent maltose, and about 34 percent triose and larger oligosaccharides on a dry basis as the starting material. The corn syrup was diluted with an equal weight of water to form an aqueous solution with 18.5 percent glucose.
Approximately 50 ml of the aqueous corn syrup solution was added to a water-jacketed reaction vessel and equilibrated to 35°C. Glucose oxidase (OxyGO 1500, Genencor) was added to the vessel at 0.5 percent and catalase (Fermcolase 1000, Genencor) was added to the vessel at 1.0 percent. The pH was then adjusted to about 5.3 by adding 0.1 N HCl; at which point, air was vigorously bubbled through the reaction vessel at a rate of 5 mm using an Aalborg Instruments FM013-88 flowmeter. The pH of the reaction was monitored and maintained at 5.2 by the addition of 1N NaOH using a Brinkmann 702 SM Titrino titrator.
The amount of NaOH added was measured as an indicator of the amount of the glucose portion of the corn syrup that was converted to gluconic acid. The amount of NaOH added is also directly proportional (on a molar basis) to the amount of gluconic acid being produced. It is believed that allowing the reaction to proceed further will result in additional conversion of glucose to gluconic acid. The results are provided in Table 6 below.
Table 6: Conversion of corn syrup glucose to gluconic acid

| Time (min) | Running Total of 1N NaOH (ml) (Measured) | Running Total Gluconic Acid Formed (g) (Calculated) | Total glucose converted (%) (Calculated) | GI (Calculated) |
|---|---|---|---|---|
| 0 | 0.00 | 0.00 | 0 | 76 |
| 30 | 2.10 | 0.41 | 4.1 | 75 |
| 60 | 4.60 | 0.90 | 9.0 | 74 |
| 120 | 9.63 | 1.89 | 18.7 | 71 |
| 150 | 12.40 | 2.43 | 24.1 | 69 |
| 180 | 15.20 | 2.98 | 29.6 | 68 |
| 210 | 17.33 | 3.40 | 33.7 | 65 |
| 240 | 19.93 | 3.91 | 38.8 | 65 |
| 270 | 22.28 | 4.37 | 43.4 | 63 |
| 300 | 24.99 | 4.90 | 48.6 | 62 |

**EXAMPLE 5:** Conversion of Honey to a Sweet Acidulant.

An experiment was conducted using honey (Grade A Clover Honey, Dutch Gold) having about 31 percent glucose, about 38 percent fructose, about 1 percent sucrose, about 7 percent maltose, and about 18 percent water as the starting material. On a dry basis, the honey had about 40.2 percent glucose, about 49.4 percent fructose, about 1.3 percent sucrose, and about 9.1 percent maltose.

The honey was diluted with an equal weight of water to yield an aqueous solution. Approximately 50 ml of the aqueous honey solution was added to a water-jacketed reaction vessel and equilibrated to 35°C. Glucose oxidase (OxyGO 1500, Genencor) was added to the vessel at 0.5 percent and catalase (Fermcolase 1000, Genencor) was added to the vessel at 1.0 percent. The pH was then adjusted to about 5.3 by adding 0.1 N HCl; at which point, air was vigorously bubbled through the reaction vessel at a rate of 5 mm using an Aalborg Instruments FM013-88 flowmeter. The pH of the reaction was monitored and maintained at 5.2 by the addition of 1N NaOH using a Brinkmann 702 SM Titrino titrator.

The amount of NaOH added was measured as an indicator of the amount of the glucose portion of the honey that was converted to gluconic acid. The NaOH added is also directly proportional (on a molar basis) to the amount of gluconic acid being produced. The results are provided in Table 7 below.

Table 7: Conversion rate of honey glucose to gluconic acid

| Time (min) | Running Total of 1N NaOH(ml) (measured) | Running Total of Gluconic Acid (g) (calculated) | Total Glucose Converted (%) (Calculated) | GI Value (Calculated)* |
|---|---|---|---|---|
| 0 | 0.00 | 0.00 | 0 | 58 |
| 60 | 1.18 | 0.23 | 1.4 | 57 |
| 120 | 3.29 | 0.64 | 3.8 | 56 |
| 180 | 8.45 | 1.66 | 9.8 | 54 |
| 240 | 11.95 | 2.34 | 13.9 | 53 |
| 300 | 15.99 | 3.13 | 18.6 | 51 |
| 360 | 19.52 | 3.83 | 22.7 | 50 |
| *50 gram sample based on dextrose | | | | |

**EXAMPLE 6:** Conversion of Molasses to a Sweet Acidulant.

An experiment was conducted using molasses (Blackstrap, Domino Sugar) having about 3 percent glucose, about 6 percent fructose, about 36 percent sucrose, about 4 percent maltose, and about 24 percent water as the starting material. On a dry basis, the molasses had about 6.1 percent glucose, about 12.2 percent fructose, about 73.4 percent sucrose, and about 8.1 percent maltose.

The molasses was diluted with an equal weight of water to form an aqueous solution having about 1.5 percent glucose. Approximately 50 ml of the aqueous molasses solution was added to a water-jacketed reaction vessel and equilibrated to 35°C. Glucose oxidase (OxyGO 1500, Genencor) was added to the vessel at 0.5 percent and catalase (Fermcolase 1000, Genencor) was added to the vessel at 1.0 percent. The pH was then adjusted to about 5.3 by adding 0.1 N NaOH; at which point, air was vigorously bubbled through the reaction vessel at a rate of 5 mm using an Aalborg Instruments FM013-88 flowmeter. The pH of the reaction was monitored and maintained at 5.2 by the addition of 1N NaOH using a Brinkmann 702 SM Titrino titrator.

As with the previous examples, the amount of NaOH added was measured as an indicator of the amount of the glucose portion of the molasses that was converted to gluconic acid. The NaOH added is also directly proportional (on a molar basis) to the amount of gluconic acid being produced. The results are provided in Table 8 below.

Table 8: Conversion of molasses glucose to gluconic acid

| Time (hr) | Running Total of 1M NaOH Additions, ml (Measured) | Running Total of Gluconic Acid produced, g (Calculated) | Total Glucose Converted (%) (Calculated) | GI Value (Calculated) |
|---|---|---|---|---|
| 0 | 0.00 | 0.00 | 0 | 64 |
| 1 | 0.90 | 0.18 | 11 | 63 |
| 2 | 1.72 | 0.34 | 21 | 63 |
| 3 | 2.53 | 0.50 | 30 | 62 |
| 4 | 3.18 | 0.62 | 38 | 62 |
| 5 | 3.96 | 0.78 | 48 | 62 |

**EXAMPLE 7:** Preparation of a Ready-To-Drink Beverage-Type Product.

An acidic sweetener ingredient was prepared having a composition of about 6.1% gluconic acid, 14.2% glucose, 14.7% fructose, about 65% water, and a final pH of about 3.4. On a dry basis, the acidic sweetener had about 17.4 percent gluconic acid, about 40.5 percent glucose, and about 42 percent fructose.

The solution was prepared to blending the appropriate amounts of gluconic acid, glucose, and fructose in water. This solution is equivalent to a 42% HFCS diluted 1:1 with water and allowed to form 6.1% gluconic acid from the glucose present in the HFCS solution using the enzymatic reactions described above. The acidic sweetener ingredient was used to prepare a ready-to-drink, juice beverage-type product using the following formulations. The results are provided in Table 9 below.

Table 9: Ready-to-Drink Beverage Formulas

| Ingredient | Control (%) | Inventive 1 (%) | Inventive 2 (%) | Inventive 3 (%) |
|---|---|---|---|---|
| Water | 82.141 | 81.108 | 80.072 | 77.454 |
| High Fructose Corn Syrup | 15.423 | 14.536 | 13.65 | 11.888 |
| Acidic Sweetener | 0 | 2.19 | 4.38 | 8.76 |
| Juice Blend | 1.887 | 1.887 | 1.887 | 1.887 |
| Citric Acid 50% Solution | 0.538 | 0.268 | 0 | 0 |
| Flavor | 0.011 | 0.011 | 0.011 | 0.011 |

The control and inventive samples were prepared using standard thermal processing equipment with "hot fill" processing. The flavor of the inventive samples was compared to the control by a taste panel. The results indicated that substitution of about 50% of the citric acid with sweet acidulant (inventive 1) resulted in a flavor close to the control sample, while inventive samples 2 and 3 were too sweet and bitter, respectively. It is expected that the amounts of sweetener, acidulant, and acidic sweetener could be varied in samples 2 and 3 to better optimize the flavor profiles.

**EXAMPLE 8:** Preparation of a BBQ Sauce-Type Product.

An acidic sweetener ingredient as prepared in Example 7 was used to prepare a BBQ sauce-type product using the following formulation. The results are provided in Table 10 below.
Table 10: BBQ Sauce Formula

| Ingredient | Control % | Inventive % |
|---|---|---|
| Water | 70.66 | 60.78 |
| Sugar | 5.00 | 0.58 |
| Acidic Sweetener | 0 | 15.3 |
| Vinegar | 10.5 | 10.5 |
| Salt | 3.2 | 3.2 |
| Starch | 4.35 | 4.35 |
| Citric acid | 1.00 | 0 |
| Spices, flavors, color | 5.29 | 5.29 |
| Total | 100 | 100 |

The control and inventive samples were prepared in a pilot plant using typical processing equipment known to those familiar with the art. The flavor of the inventive sample was compared to the control by a taste panel. The inventive sample, in which the citric acid was completely replaced by the sweet acidulant of Example 7, tasted similar to the control BBQ sauce but was slightly sweeter.

**Claims**

1.    A liquid acidic sweetener food additive comprising:

an acidic portion provided by about 1.2 to about 28 percent gluconic acid on a solids basis, the acidic portion derived from an enzymatic conversion of a syrup sweetener having a glucose portion wherein about 3 to about 50 percent of the glucose portion in the syrup sweetener is converted to gluconic acid;
a sweet portion provided by about 20 to about 52 percent glucose on a solids basis and about 42 to about 55 percent fructose on a solids basis, the sweet portion also provided by the syrup sweetener; and
wherein the liquid acidic sweetener food additive has a glycemic index value less than about 55 and wherein the liquid acidic sweetener food additive is a single additive that provides both sweetness and acidity to comestibles.

2.    The liquid acidic sweetener food additive of claim 1, wherein the syrup sweetener is selected from the group consisting of corn syrup, high fructose corn syrup, honey, and molasses.

3.    The liquid acidic sweetener food additive of claim 2, wherein the syrup sweetener is high fructose corn syrup.

4.    The liquid acidic sweetener food additive of any one of Claims 1 to 3, wherein the acidic portion further comprises about 20 to about 28 percent gluconic acid on a solids basis and the sweet portion further comprises about 20 to about 26 percent glucose on a solids basis and about 42 to about 55 percent fructose on a solids basis; and wherein the glycemic index value is less than about 40.

5.    The liquid acidic sweetener food additive of any one of Claims 1 to 4, further comprising a pH of about 2.5 to about 4.0.

6.    A method of making a comestible comprising:

13

forming a liquid acidic sweetener additive comprising:

providing an aqueous solution of a syrup sweetener having at least a glucose portion;
adding an enzyme mixture of glucose oxidase and catalase to the aqueous solution to form a reaction mixture;
allowing the reaction mixture to react for a predetermined amount of time;
stopping the reaction mixture after about 3 to about 50 percent the glucose portion is converted to gluconic acid to form the liquid acidic sweetener additive; and
wherein the liquid acidic sweetener additive is a single additive including a glucose portion and a gluconic acid portion that provides both sweetness and acidity to comestibles and wherein the acidic sweetener additive has a glycemic index value less than about 55; and

blending the acidic sweetener additive into a low acidic comestible having a pH of about 4.5 or less.

7.   The method claim 6, wherein the syrup sweetener is selected from the group consisting of corn syrup, high fructose corn syrup, honey, and molasses.

8.   The method of claim 7, wherein the syrup sweetener is high fructose corn syrup.

9.   The method of any one of Claims 6 to 8, further comprising adding air to the reaction mixture.

10.   The method of any one of Claims 6 to 9, further comprising maintaining the pH of the reaction mixture between about 5.2 and about 5.3.

11.   The method of any one of Claims 6 to 10, further comprising maintaining the temperature of the reaction mixture between about 35 and about 45°C for the predetermined amount of reaction time.

12.   The method of any one of Claims 6 to 11, wherein the acidic sweetener additive comprises an acidic portion provided by about 1.2 to about 28 percent gluconic acid on a solids basis; a sweet portion provided by about 20 to about 52 percent glucose on a solids basis, and about 42 to about 55 percent fructose on a solids basis.

13.   The method of claim 12, wherein the acidic portion further comprises about 20 to about 28 percent gluconic acid on a solids basis and the sweet portion further comprises about 20 to about 26 percent glucose on a solids basis and about 42 to about 55 percent fructose on a solids basis; and wherein the glycemic index value is less than about 40.

14.   The method of any one of Claims 6 to 13, wherein the comestible comprises:

about 2 to about 15 percent of the acidic sweetener additive;
about 5 to about 88 percent less of another sweetener than a comestible with a similar flavor profile and without the acidic sweetener additive; and
about 50 to about 100 percent less of another acidulant than a comestible with a similar flavor profile and without the acidic sweetener additive.

15.   A food item produced from the process comprising:

forming a liquid acidic sweetener additive comprising:

providing an aqueous solution of a syrup sweetener having at least a glucose portion;
adding an enzyme mixture of glucose oxidase and catalase to the aqueous solution to form a reaction mixture; and
allowing the reaction mixture to react for a predetermined amount of reaction time such that about 3 to about 50 percent the glucose portion is converted to gluconic acid to form the liquid acidic sweetener additive; and
wherein the liquid acidic sweetener additive is a single additive including a glucose portion and a gluconic acid portion that provides both sweetness and acidity to comestibles and wherein the liquid acidic sweetener additive has a glycemic index value less than about 55; and

forming the food item with the acidic sweetener additive, another sweetener, and an optional acidulant; and

wherein the liquid acidic sweetener additive is added in an amount to achieve the desired flavor profile of the food item with levels of the another sweetener and the optional acidulant reduced from a food item having a similar flavor profile and not including the acidic sweetener additive.

16. The food item of claim 15, wherein the syrup sweetener is selected from the group consisting of corn syrup, high fructose corn syrup, honey, and molasses.

17. The food item of claim 16, wherein the syrup sweetener is high fructose corn syrup.

18. The food item of any one of Claims 15 to 17, further comprising adding air to the reaction mixture,

19. The food item of any one of Claims 15 to 18, further comprising maintaining the pH of the reaction mixture between about 5.2 and about 5.3.

20. The food item of any one of Claims 15 to 19, further comprising maintaining the temperature of the reaction mixture between about 35 and about 45°C for the predetermined amount of reaction time.

21. The food item of any one of Claims 15 to 20, wherein the acidic sweetener additive comprises an acidic portion provided by about 1.2 to about 28 percent gluconic acid on a solids basis; a sweet portion provided by about 20 to about 52 percent glucose on a solids basis and about 42 to about 55 percent fructose on a solids basis.

22. The food item of claim 21, wherein the acidic portion further comprises about 20 to about 28 percent gluconic acid on a solids basis and the sweet portion further comprises about 20 to about 26 percent glucose on a solids basis and about 42 to about 55 percent fructose on a solids basis; and wherein the glycemic index value is less than about 40.

23. The food item of any one of Claims 15 to 20, wherein the food item comprises:

about 2 to about 15 percent of the acidic sweetener additive;
about 5 to about 88 percent less of the another sweetener than a food item with a similar flavor profile and without the acidic sweetener additive; and
about 50 to about 100 percent less of the acidulant than a food item with a similar flavor profile and without the acidic sweetener additive.

24. The food item of any one of Claims 15 to 23, wherein the pH of the food item is about 4.5 or less.

25. A food item comprising the liquid acidic sweetener food additive of any one of Claims 1 to 5.

European Patent Office

**EUROPEAN SEARCH REPORT**

Application Number

EP 07 11 5648

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | WO 2004/052900 A (FONTERRA CO OPERATIVE GROUP LT [NZ]; HAISMAN DEREK ROBIN [NZ]; ARCHER) 24 June 2004 (2004-06-24) * page 2, lines 15-33; page 8, lines 21-29; claims 1-35 * ----- | 1-25 | INV. A23L1/09 A23L1/236 A23L1/24 A23L1/29 A23L1/39 |
| Y | WO 96/35800 A (GIST BROCADES BV [NL]; VROEMEN ALBERT JOSEPH [FR]; BEVERINI MARC [FR]) 14 November 1996 (1996-11-14) * page 9, lines 19-35; page 10, line 29 - page 11, line 17; examples 1-7; claims 1-17 * ----- | 1-25 | |
| Y | FR 2 622 598 A (SGN SOC GEN TECH NOUVELLE [FR]) 5 May 1989 (1989-05-05) * page 2, lines 8-14; examples 1-4 * ----- | 1-25 | |

TECHNICAL FIELDS SEARCHED (IPC)

A23L

The present search report has been drawn up for all claims

| Place of search | Date of completion of the search | Examiner |
|---|---|---|
| Munich | 26 March 2008 | Georgopoulos, N |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 1 935 257 A1**

## ANNEX TO THE EUROPEAN SEARCH REPORT
## ON EUROPEAN PATENT APPLICATION NO.

EP 07 11 5648

This annex lists the patent family members relating to the patent documents cited in the above-mentioned European search report.
The members are as contained in the European Patent Office EDP file on
The European Patent Office is in no way liable for these particulars which are merely given for the purpose of information.

26-03-2008

| Patent document cited in search report | | Publication date | Patent family member(s) | | Publication date |
|---|---|---|---|---|---|
| WO 2004052900 | A | 24-06-2004 | AU | 2003288818 A1 | 30-06-2004 |
| | | | EP | 1569949 A1 | 07-09-2005 |
| | | | JP | 2006515510 T | 01-06-2006 |
| | | | NZ | 523100 A | 25-02-2005 |
| | | | US | 2006216401 A1 | 28-09-2006 |
| WO 9635800 | A | 14-11-1996 | AT | 216724 T | 15-05-2002 |
| | | | AU | 5998396 A | 29-11-1996 |
| | | | CA | 2194859 A1 | 14-11-1996 |
| | | | DE | 69620819 D1 | 29-05-2002 |
| | | | DE | 69620819 T2 | 07-11-2002 |
| | | | JP | 3910213 B2 | 25-04-2007 |
| | | | JP | 10502825 T | 17-03-1998 |
| | | | NL | 1003095 C2 | 12-11-1996 |
| | | | NL | 1003095 A1 | 05-09-1996 |
| | | | US | 5897995 A | 27-04-1999 |
| FR 2622598 | A | 05-05-1989 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 3619396 A
- US 3935071 A
- US 4460686 A
- US 5897995 A

**Non-patent literature cited in the description**

- **FOSTER-POWELL, K. et al.** 2002. International Table of Glycemic Index and Glycemic Load Values: 2002. *Am. J. Clin. Nutr.,* 2002, vol. 76, 5-56